Europäisches Patentamt

European Patent Office

Office européen des brevets

(11) Numéro de publication: **0 299 854 B1**

(12) **FASCICULE DE BREVET EUROPEEN**

(45) Date de publication de fascicule du brevet: **16.12.92** (51) Int. Cl.5: **F16C 17/26**, F01C 21/02

(21) Numéro de dépôt: **88401778.1**

(22) Date de dépôt: **07.07.88**

(54) **Palier lisse à double portée concentrique.**

(30) Priorité: **10.07.87 FR 8710013**

(43) Date de publication de la demande:
**18.01.89 Bulletin 89/03**

(45) Mention de la délivrance du brevet:
**16.12.92 Bulletin 92/51**

(84) Etats contractants désignés:
**AT BE CH DE ES FR GB GR IT LI LU NL SE**

(56) Documents cités:
**DE-A- 3 208 982**
**GB-A- 1 515 234**
**GB-A- 2 049 052**
**US-A- 4 133 618**

(73) Titulaire: **Egretier, Jean-Michel**
**Domaine de Camplazens Armissan**
**F-11110 Coursan(FR)**

(72) Inventeur: **Egretier, Jean-Michel**
**Domaine de Camplazens Armissan**
**F-11110 Coursan(FR)**

(74) Mandataire: **Manresa Val, Manuel**
**Gerona n. 34**
**E-08010 Barcelona(ES)**

Rank Xerox (UK) Business Services

## Description

La présente invention se réfère aux paliers lisses du genre destiné à assurer la liaison en rotation entre un arbre d'entraînement sur lequel est fixé le rotor et un châssis ou carter servant de support aux parties fixes et mobiles de l'ensemble considéré.

Les paliers connus du genre en question sont, soit à roulement (à billes, à aiguilles, etc...) soit à garnitures mécaniques lisses.
Les premiers présentent les inconvénients majeurs suivants :

- ils sont difficiles à démonter ;
- les roulements parfaitement étanches n'existent pas dans la pratique (risque de blocage).

Les seconds, bien que n ayant pas cet inconvénient, présentent un problème d'usure, au niveau des bagues de frottement, nécessitant des interventions fréquentes surtout, comme c'est souvent le cas, s'ils sont utilisés dans des conditions de dépassement des charges admises.

Un autre type d'ensemble comportant des pièces fixes et des pièces mobiles est décrit dans le brevet GB-A-1515234 qui concerne deux bras de soutien fixes (2) servant de support à un tambour rotatif (1) par l'intermédiaire d'une bague de frottement (7) située entre le tambour (1) (par l'intermédiaire de la pièce 3) et le bras (2) (par l'intermédiaire de la pièce 6). Ledit tambour rotatif (1) sert à son tour de support à un arbre fixe (12) par l'intermédiaire d'une bague de frottement (11) située entre le tambour (1) (par l'intermédiaire de la pièce 8) et ledit arbre (12).
Le palier fixe (2,6) supporte seul le tambour rotatif (1,3) qui supporte à son tour par l'intermédiaire des pièces (8) et (11) l'arbre flottant (12) qui est rendu fixe en rotation au moyen de clavettes (14).

L'invention vise à réaliser un palier fixe solidaire du châssis ou carter de la machine porteur d'un ensemble arbre-rotor en mouvement rotatif de telle manière que l'ensemble mobile arbre-rotor repose sur le palier par l'intermédiaire d'une première bague de frottement située entre l'arbre et le palier et d'une deuxième bague de frottement, concentrique à la première, située radialement entre le rotor et le palier de manière à accroître la partie de la surface en contact donc à diminuer l'usure des parties en mouvement relatif. En outre, doux bagues d'usure sont intercalées respectivement entre la première bague de frottement et l'arbre, et entre la deuxième bague de frottement et le palier.
Ainsi réalisée, l'invention présente l'avantage de supprimer les divers inconvénients sus-mentionnés.

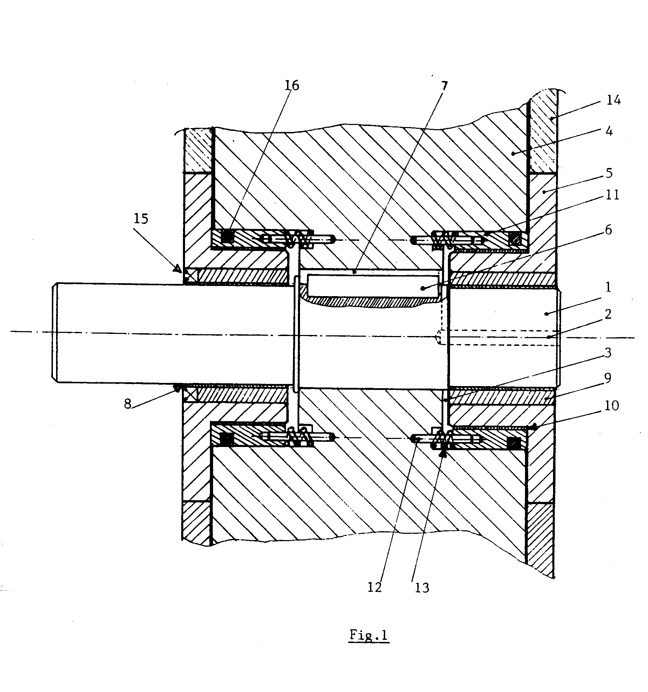

Le dessin annexé, donné à titre d'exemple, permettra de mieux comprendre l'invention, les caractéristiques qu'elle présente et les avantages qu'elle est susceptible de procurer.

Il représente une vue en coupe de l'ensemble rotor-palier-carter du dispositif.

L'ensemble représenté comporte dans sa réalisation préférentielle ;

- un arbre d'entraînement (1) possédant, à l'extrémité opposée au moteur d'entraînement, une canalisation (2) destinée à véhiculer le lubrifiant vers la cavité (3), aménagée dans le rotor (4) et destinée à loger les divers éléments entrant dans la composition du palier (5). Cet arbre comporte une ou plusieurs clavettes (6) (ou canelures) destinées à entraîner en rotation le rotor (4).

Le passage du lubrifiant d'un palier à l'autre se fait par l'intermédiaire de la ou des rainures (7) aménagées dans le rotor pour assurer le logement des clavettes ou canelures.
Des bagues d'usure (8), emmanchées sur l'arbre (1), assurent la liaison des bagues de frottement (9), solidaires du palier (5), avec l'arbre d'entraînement (1).

- Deux paliers (5) comportant :
  . intérieurement une première bague de frottement (9) ;
  . extérieurement une deuxième bague d'usure (10) assurant la liaison de la bague de frottement (11), solidaire du rotor (4), avec le palier (5).
- Un rotor (4) comportant :
  . une cavité (3) destinée à loger les diverses bagues entrant dans la composition du palier ;
  . une deuxième bague de frottement (11), concentrique à la première (9), montée glissante sur le rotor, entraînée en rotation grâce à un ou plusieurs axes (12) solidaires du rotor et maintenue en pression contre le palier grâce à un ou plusieurs ressorts (13) placés entre le rotor et la bague ;
- Un châssis ou carter (14) servant de support fixe au palier.

L'étanchéité de l'ensemble est assurée par :

- un joint (15) à l'extrémité de la bague (9) ;
- un joint torique (16) sur la bague (11) ;
- le maintien en pression de la bague (11) contre le palier (5).

Bien entendu, on pourra prévoir d'autres variantes, utiliser tous types de matériaux et étendre l'invention à d'autres applications.
En particulier, l'un au moins des paliers pourra être légèrement conique pour en faciliter le démontage.

## Revendications

1. Palier lisse (5) destiné à assurer la liaison entre un arbre d'entraînement (1) sur lequel est fixé un rotor (4) et un châssis ou carter fixe (14) sur lequel ledit palier est fixé , caractérisé en ce que l'ensemble mobile arbre (1) - rotor (4) repose sur le palier (5) par l'intermédiaire d'une première bague de frottement (9) située entre l'arbre rotatif (1) et le palier fixe (5) et une deuxième bague de frottement (11), concentrique à la première, située radialement entre le rotor (4) et le palier (5), de telle manière que la charge dudit ensemble mobile soit supportée simultanément par les deux bagues de frottement.

2. Palier, selon la revendication 1, caractérisé en ce que la deuxième bague, qui est montée glissante sur le rotor, est entraînée en rotation grâce à un ou plusieurs axes (12), solidaires du rotor, et maintenue en pression contre le palier grâce à un ou plusieurs ressorts (13) placés entre le rotor et la bague (11).

3. Palier, selon la revendication 1, caractérisé en ce qu'une première bague d'usure (8), solidaire de l'arbre, est intercalée entre la première bague de frottement (9) et l'arbre (1).

4. Palier, selon la revendication 1, caractérisé en ce qu'une deuxième bague d'usure (10), solidaire du palier, est intercalée entre la deuxième bague de frottement (11) et le palier (5).

## Claims

1. Sleeve bearing (5) to ensure the link between a driving shaft (1) to which a rotor (4) is fixed and a static frame or carter (14) on which said bearing is attached, **characterized** in that the movable assembly shaft (1) - rotor (4) lies on the bearing (5) by a first friction ring (9) placed between the rotatable shaft (1) and the static bearing (5) and a second friction ring (11) concentric to the first one, radially placed between rotor (4) and the bearing (5) so that the load of said movable assembly is simultaneously supported by both friction rings.

2. Bearing according to claim 1 characterized in that the second ring which is slidably set up on the rotor is rotatably driven by two or more pins (12), integral with the rotor, and pressed against the bearing by two or more springs (13) placed between the rotor and the ring (11).

3. Bearing according to claim 1 characterized in that a first wearing ring (8) integral with the shaft is interposed between the first friction ring (9) and the shaft (1).

4. Bearing according to claim 1 characterized in that a second wearing ring (10) integral with the bearing is interposed between the second friction ring (11) and the bearing (5).

## Patentansprüche

1. Gleitlager (5) dazu bestimmt, die Verbindung zwischen einer Triebwelle (1) auf welcher ein Rotor (4) und ein Chassis oder festes Gehäuse (14) befestigt sind, auf welchem das genannte Lager befestigt ist, sicherzustellen, dadurch gekennzeichnet, daß der bewegliche Zusammenbau der Welle (1) und des Rotors (4) sich durch einen ersten Reibring (9) auf dem Lager (5) abstützt, welcher zwischen der drehbaren Welle (1) und dem festen Lager (5) liegt und einem zweiten Reibring (11) welcher mit dem erstgenannten konzentrisch ist und radial zwischen dem Rotor (4) und dem Lager (5) liegt, so daß die Belastung des genannten beweglichen Zusammenbaues gleichzeitig von beiden Reibringen getragen wird.

2. Lager, gemäß Patentanspruch 1, dadurch gekennzeichnet, daß der zweite Ring, welcher gleitend auf dem Rotor aufgebaut ist, dank einem oder mehreren mit dem Rotor fest verbundenen Wellen (12) drehend angetrieben wird und durch Druck gegen das Lager gepreßt wird, welcher Druck von einer oder mehreren Federn (13) ausgeübt wird, welche zwischen dem Rotor und dem Ring (11) angeordnet sind.

3. Lager, gemäß Patentanspruch 1, dadurch gekennzeichnet, daß ein erster Schleißring (8) welcher an der Welle befestigt ist, zwischen dem ersten Reibring (9) und der Welle (1) angeordnet ist.

4. Lager, gemäß Patentanspruch 1, dadurch gekennzeichnet, daß ein zweiter Schleißring (10), welcher an dem Lager befestigt ist, zwischen dem zweiten Reibring (11) und dem Lager (5) angeordnet ist.

Fig.1